# FASCICULE DE BREVET EUROPEEN

(11) **EP 1 310 687 B1**
(45) Date de publication et mention de la délivrance du brevet: **08.03.2006**
(21) Numéro de dépôt: 02292762.8
(22) Date de dépôt: 06.11.2002
(51) Int. Cl.: F16C 11/06, F16N 7/36

(54) **Dispositif de lubrification d'un palier à rotule**
Schmierungsvorrichtung für Gelenklager
Lubrication device for articulated bearing

(30) Priorité: 08.11.2001 FR 0114449
(43) Date de publication de la demande: 14.05.2003
(73) Titulaire: AIRBUS France, 31060 Toulouse (FR)
(72) Inventeur: Reniau, Grégory, 31170 Tournefeuille (FR)
(74) Mandataire: Poulin, Gérard

(56) Documents cités:
- DD-A- 203 475
- US-A- 4 576 488
- US-A- 5 247 873
- US-A- 5 435 652
- US-A- 5 816 731
- US-A- 6 145 625

## Description

### Domaine technique

L'invention concerne un dispositif conçu pour assurer la lubrification d'un palier comportant une rotule.

De façon plus précise, l'invention concerne un dispositif permettant de lubrifier une rotule en circuit fermé, de façon automatique, lors des mouvements de rotation d'un axe supporté par le palier.

L'invention s'applique notamment, bien que de façon non limitative, aux paliers supportant un train d'atterrissage sur la structure d'un aéronef. Dans ce cas, la lubrification s'effectue lors des mouvements de rentrée et de sortie du train d'atterrissage.

### Etat de la technique

Un train d'atterrissage rétractable d'aéronef comporte certaines pièces, telles que la ferrure principale du train et la contrefiche, qui sont munies d'un certain nombre d'axes liés en rotation à la structure de l'aéronef, de façon à définir autant d'axes de rotation (par exemple, deux axes de rotation orientés selon une direction transversale par rapport à l'aéronef). Ces axes de rotation définissent une cinématique de descente et de montée du train d'atterrissage dans la case de train de l'aéronef.

La liaison entre les différents axes du train d'atterrissage et la structure de l'aéronef est souvent réalisée au moyen de paliers comportant des rotules. Celles-ci permettent aux différents axes du train d'atterrissage d'adjoindre aux mouvements de rotation autorisés par les différents axes de rotation des mouvements de pivotement par rapport à la structure de l'aéronef. Ces mouvements de pivotement, aussi appelés "phénomène de rotulage", se traduisent par de légères rotations du train d'atterrissage autour de deux autres axes de rotation qui définissent un trièdre orthogonal avec l'axe de rotation considéré.

Le phénomène de rotulage se produit par exemple lors des déformations de la structure de l'aéronef. Ces déformations ont lieu notamment lors de manoeuvres au sol (roulage) ou lors de certaines phases du vol pendant lesquelles des contraintes importantes peuvent être appliquées à ladite structure.

Les rotules de ces paliers à rotules comprennent habituellement une noix pouvant pivoter dans une cage. Un procédé de fabrication d'une telle rotule est décrit dans le document US-A-1 693 748. La cage y est réalisée en une seule pièce, dont une première extrémité est usinée à la forme souhaitée avant l'introduction de la noix dans ladite cage. Une protubérance annulaire est formée à l'extérieur de la cage, sur sa deuxième extrémité. On déforme ensuite cette deuxième extrémité de la cage en introduisant ladite cage à force dans son support. Cela a pour effet de donner à la cage sa forme définitive et d'y enfermer la noix.

Lorsque les dimensions de la rotule sont importantes, ce procédé devient difficile à mettre en oeuvre. Dans ce cas, la cage peut être composée de deux demi cages secondaires, insérées dans une cage primaire cylindrique pour permettre le montage de la noix.

Les déformations précitées de la structure de l'aéronef peuvent provoquer des mouvements relatifs de la noix par rapport à la cage, correspondant au phénomène de rotulage déjà mentionné, ainsi que des déplacements en translation, voire de légères rotations, de l'axe à l'intérieur de la noix, si ledit axe n'est pas bloqué dans celle-ci.

Ces déplacements sous charge ont pour effet d'appliquer des forces de frottement sur les rotules des paliers. Ces forces de frottement sont d'autant plus élevées que les charges produisant les déformations sont importantes et que le coefficient de frottement entre les surfaces est mauvais. De ce point de vue, on sait que le coefficient de frottement varie notamment en fonction des matériaux en présence et de la lubrification.

Or, les forces de frottement peuvent créer, entre la noix et la cage, un couple résistant susceptible d'empêcher les rotules de remplir pleinement leur fonction pour compenser les déformations. Les forces de frottement risquent également de ne pas permettre à la rotation de l'axe dans la noix de s'effectuer dans des conditions correctes, lorsqu'un couple et/ou des efforts axiaux sont appliqués sur ledit axe.

Ces phénomènes peuvent parfois avoir pour conséquences des endommagements des axes des trains, dus par exemple à l'apparition de surcontraintes localisées aux extrémités du palier, en raison de la flexion de l'axe qui provoque un désalignement longitudinal de celui-ci dans le palier.

Ces phénomènes peuvent aussi conduire à une rotation des demi cages secondaires dans la cage primaire. Cette rotation entraîne un désalignement des orifices de lubrification et des rainures de lubrification. Il en résulte que la graisse ne peut plus être renouvelée dans lesdites rainures, ce qui peut avoir pour conséquence une dégradation des surfaces insuffisamment lubrifiées, c'est-à-dire un endommagement de la rotule.

Enfin, les phénomènes engendrés par les forces de frottement peuvent aussi conduire à des endommagements des ferrures formant les parties structurales du train d'atterrissage, lorsque celles-ci ont subi des couples et des efforts parasites.

Ces différents problèmes sont d'autant plus sensibles que les déformations de la structure de l'avion sont importantes. Souvent, ces déformations augmentent elles-mêmes avec la souplesse de l'avion, qui est généralement plus élevée dans le cas d'avions de grandes dimensions. Dans ce cas, les problèmes précités liés aux forces de frottement doivent donc être considérés avec une attention particulière.

Une technique connue pour réduire les forces de frottement consiste à lubrifier d'une part les surfaces de contact entre la noix et la cage du palier recevant cette noix et d'autre part les surfaces de contact entre l'axe du train et l'alésage formé dans la noix pour recevoir cet axe. Cette lubrification est réalisée en injectant de la graisse entre lesdites surfaces de contact, lors des opérations de maintenance.

Plus précisément, les surfaces à lubrifier sont généralement pourvues de gorges ou de rainures qui permettent la circulation de la graisse et donc sa répartition sur ces surfaces. La graisse est injectée sous pression au moyen d'une pompe, par l'intermédiaire de graisseurs liés aux rainures. La graisse usagée est expulsée hors des rainures par des orifices appropriés.

Les opérations de maintenance sont généralement effectuées sensiblement tous les 500 cycles de manoeuvre des trains d'atterrissage, ce qui correspond à une périodicité d'environ 4 mois pour un avion moyen courrier, dans le cas d'une exploitation usuelle.

Cette technique de renouvellement de la graisse utilisée pour lubrifier les paliers à rotules des trains d'aéronefs pose plusieurs problèmes.

Ainsi, on a vu que la graisse n'est renouvelée que périodiquement, après un certain nombre de manoeuvres du train entre deux opérations de maintenance. Il se produit donc un vieillissement de la graisse, qui a généralement pour conséquence une dégradation de ses propriétés de lubrification. Cette dégradation est favorisée par la pollution, les variations de température et de pression, etc.

De plus, si la quantité de graisse neuve injectée lors d'une opération de maintenance est insuffisante, toute la graisse usagée peut ne pas être expulsée des surfaces lubrifiées. On peut alors aboutir à une moins bonne lubrification desdites surfaces du fait que la graisse usagée restante se mélange avec la graisse neuve. Cette situation est d'autant plus probable que la graisse usagée peut parfois obstruer les rainures, ce qui empêche son remplacement complet par de la graisse neuve.

En outre, après un certain nombre de manoeuvres du train d'atterrissage, une partie de la graisse est expulsée sur les bords des surfaces lubrifiées. La lubrification de ces surfaces est donc moins bonne, en raison d'un manque de graisse.

### Exposé de l'invention

L'invention a précisément pour objet un dispositif de lubrification d'un palier à rotule, dont la conception originale lui permet de renouveler la graisse entre les surfaces en contact à chaque rotation de l'axe, en circuit fermé, afin notamment de limiter le vieillissement de la graisse, le risque de manque de graisse et le risque d'obstruction des rainures par de la graisse usagée, de façon à améliorer la qualité de la lubrification et à diminuer la consommation de graisse.

Conformément à l'invention, ce résultat est obtenu au moyen d'un dispositif de lubrification d'un palier à rotule comportant un axe de pivotement, le dispositif comprenant au moins une rainure de lubrification du palier à rotule, caractérisé en ce que le dispositif comprend de plus un réservoir de lubrifiant relié à la rainure par un circuit fermé, des moyens de pompage aptes à faire circuler le lubrifiant dans le circuit entre le réservoir et la rainure et des moyens pour actionner les moyens de pompage sous l'effet d'un mouvement de rotation de l'axe de pivotement.

Ce dispositif permet de renouveler le lubrifiant, c'est-à-dire généralement la graisse, entre les surfaces lubrifiées du palier lors de chaque rotation de l'axe de pivotement. Selon la capacité du réservoir, la graisse est donc utilisée beaucoup moins souvent que lorsqu'on utilise un dispositif de lubrification de l'art antérieur. Cela limite le vieillissement et améliore par conséquent la qualité de la lubrification.

De plus, étant donné que la graisse circule fréquemment dans les rainures, l'obstruction de celles-ci par de la graisse usagée est beaucoup moins probable que lorsqu'on utilise un dispositif de l'art antérieur.

En outre, étant donné que les moyens de pompage injectent de la graisse dans les rainures à chaque rotation de l'axe de pivotement, il n'y a plus de risque de mauvaise lubrification des surfaces en contact par manque de graisse, comme cela peut être le cas avec un dispositif de l'art antérieur.

De surcroît, le dispositif selon l'invention permet de renouveler la graisse en circuit fermé. La consommation de graisse est donc limitée au renouvellement de celle-ci lors d'opérations périodiques de maintenance.

Dans un mode de réalisation préféré de l'invention, le dispositif comprend au moins deux rainures de lubrification et des moyens pour distribuer le lubrifiant à chacune desdites rainures, de façon cyclique, lors de mouvements de rotation successifs de l'axe de pivotement.

Avantageusement, les moyens de pompage comprennent un piston mobile selon une direction donnée à l'intérieur du réservoir de lubrifiant, de façon à diviser celui-ci en deux chambres à volumes variables.

Dans ce cas, une première desdites chambres est avantageusement reliée à une première extrémité d'une première rainure par une première soupape, la deuxième chambre est reliée à la deuxième extrémité de la première rainure par une deuxième soupape munie de moyens anti-retour, la deuxième chambre est reliée à une première extrémité d'une deuxième rainure par une troisième soupape et la première chambre est reliée à la deuxième extrémité de la deuxième rainure par une quatrième soupape munie de moyens anti-retour.

Généralement, le palier à rotule comprend une cage de rotule, une noix de rotule montée dans la cage de rotule et ledit axe de pivotement, celui-ci traversant un alésage formé dans la noix de rotule. La première rainure est alors formée entre la cage de rotule et la noix de rotule et la deuxième rainure est formée entre la noix de rotule et l'axe de pivotement.

De préférence, des premiers moyens d'étanchéité sont prévus entre la cage de rotule et la noix de rotule, de part et d'autre de la première rainure et des deuxièmes moyens d'étanchéité sont prévus entre la noix de rotule et l'axe de pivotement, de part et d'autre de la deuxième rainure.

Pour permettre le remplacement de la graisse lors des opérations de maintenance, un passage d'injection de lubrifiant neuf relie avantageusement un premier graisseur à la première extrémité de la première rainure et un passage d'expulsion de lubrifiant usagé relie la première chambre à un deuxième graisseur.

Dans une variante de réalisation avantageuse, les deux chambres à volume variable sont reliées à une chambre de compensation qui contient du lubrifiant maintenu sous pression par des moyens appropriés, tels qu'un second piston. Cette variante permet de réduire l'encombrement ou d'utiliser des joints présentant des caractéristiques d'étanchéité moins élevées.

Dans le mode de réalisation préféré de l'invention, le réservoir de lubrifiant et le piston mobile sont logés, de préférence, à l'intérieur de l'axe de pivotement, de façon à présenter un axe géométrique commun avec celui-ci.

Dans ce dernier cas, les moyens pour actionner les moyens de pompage comprennent avantageusement une bielle dont une première extrémité est articulée sur le piston en un emplacement excentré par rapport audit axe géométrique commun et dont une deuxième extrémité est articulée sur une structure solidaire de la cage de rotule en un emplacement également excentré par rapport audit axe géométrique commun.

Selon une application privilégiée, bien que non limitative de l'invention, l'axe de pivotement fait partie d'un train d'atterrissage d'avion.

Des opérations successives de sortie et de rentrée du train d'atterrissage entraînent alors des rotations successives de l'axe de pivotement dans l'un et l'autre sens, qui ont pour effet d'injecter du lubrifiant alternativement dans la première rainure et dans la deuxième rainure.

### Brève description des dessins

On décrira à présent, à titre d'exemple illustratif et non limitatif, un mode de réalisation préféré de l'invention, en se référant aux dessins annexés, dans lesquels :
- la figure 1 est une vue en perspective qui représente schématiquement un train d'atterrissage d'avion dont les axes de pivotement sont montés sur des paliers à rotules susceptibles d'être équipés de dispositifs de lubrification conformes à l'invention ;
- la figure 2 est un schéma qui illustre le principe de fonctionnement du dispositif de lubrification selon l'invention ;
- la figure 3 est une vue en coupe longitudinale qui illustre un mode de réalisation préféré du dispositif de lubrification selon l'invention, intégré à un axe de pivotement d'un train d'atterrissage d'avion ;
- les figures 4A et 4B sont des vues schématiques, respectivement en coupe longitudinale et en bout, qui représentent le dispositif de lubrification de la figure 3 dans une position correspondant à l'état rentré du train d'atterrissage ; et
- les figures 5A et 5B sont des vues comparables aux figures 4A et 4B, qui représentent le dispositif de lubrification de la figure 3 dans une position correspondant à l'état sorti du train d'atterrissage.

### Description détaillée d'un mode de réalisation préféré de l'invention

Le mode de réalisation illustré sur les figures concerne plus précisément la lubrification des paliers à rotules qui équipent les axes de pivotement par lesquels un train d'atterrissage rétractable d'aéronef est articulé sur la structure de cet aéronef.

On observera cependant que l'invention n'est pas limitée à cette application et peut être utilisée dans tous les cas où un axe de pivotement ou de rotation est supporté par une structure de façon telle que les mouvements de rotation dudit axe soient suffisamment lents pour permettre une circulation convenable de la graisse.

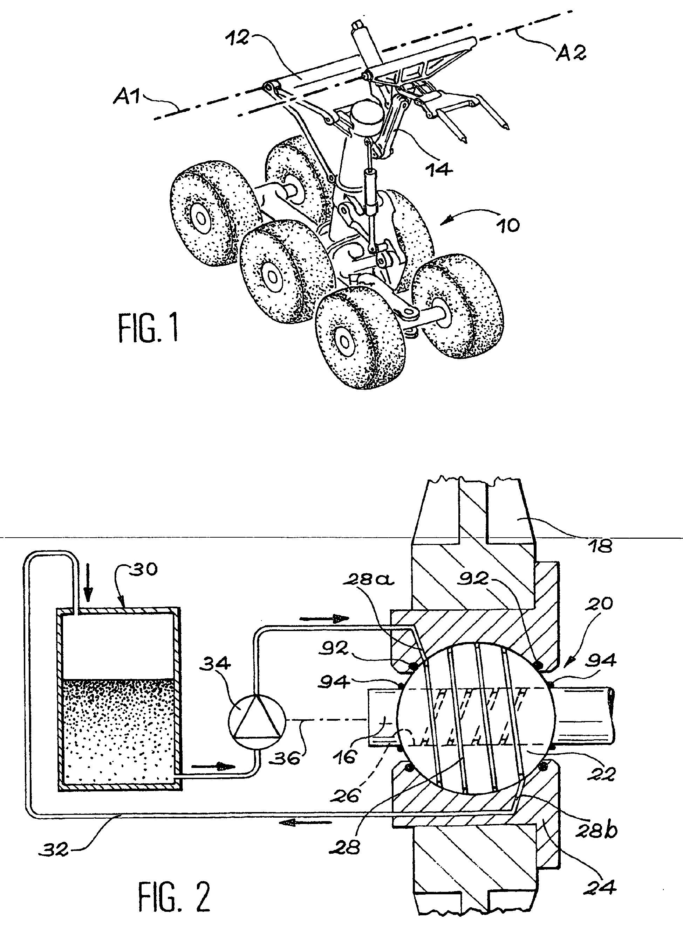

Comme on l'a représenté schématiquement à titre d'exemple sur la figure 1, la liaison entre un train d'atterrissage rétractable 10 d'aéronef et la structure (non représentée) de cet aéronef comprend un certain nombre d'axes de pivotement ou de rotation. Dans le cas de la figure 1, la liaison comprend deux axes de pivotement dont seuls les axes géométriques sont illustrés en A1 et A2.

Chacun de ces axes de pivotement est solidaire d'une pièce du train d'atterrissage 10, telle que la ferrure principale 12 ou la contrefiche 14. La liaison entre chaque axe de pivotement et la structure de l'aéronef est assurée par des paliers comportant des rotules. L'un de ces paliers est illustré schématiquement sur la figure 2.

Plus précisément, la figure 2 montre schématiquement l'extrémité d'un axe de pivotement 16, montée dans une pièce de structure 18 de l'aéronef par l'intermédiaire d'un palier 20 comportant une rotule. La rotule est elle-même constituée d'une noix 22, montée de façon rotulante dans une cage 24.

La noix 22 est traversée par un alésage 26 dans lequel est monté l'axe de pivotement 16. La surface extérieure de la noix 22 comprend une partie sphérique, qui est en contact avec une surface intérieure complémentaire de la cage 24. Cette dernière est elle-même fixée dans la pièce de structure 18 de l'aéronef.

Les mouvements rotulants de la rotule du palier se produisent entre les surfaces sphériques complémentaires de la noix 22 et de la cage 24. Ces surfaces doivent donc être lubrifiées.

Des déplacements relatifs de moindre amplitude en translation et éventuellement en rotation se produisent également entre la cage 24 et l'axe de pivotement 16. Les surfaces en contact de ces deux pièces doivent donc également être lubrifiées.

Dans le mode de réalisation représenté sur les figures, la lubrification de ces différentes surfaces en contact est effectuée par un dispositif de lubrification conforme à l'invention.

Comme on l'a représenté schématiquement sur la figure 2, ce dispositif comprend au moins une rainure 28 formée sur les surfaces sphériques en contact de la noix 22 et de la cage 24. Cette rainure a par exemple la forme d'une hélice qui chemine entre lesdites surfaces. Elle peut être usinée dans l'une et/ou l'autre de ces surfaces.

Conformément à l'invention, le dispositif de lubrification comprend de plus un réservoir de lubrifiant 30, qui est relié à chacune des extrémités de la rainure 28 par un circuit fermé 32. Ce circuit 32, ainsi que le réservoir 30 et la rainure 28 sont remplis d'un lubrifiant de forte viscosité, tel que de la graisse. Des moyens de pompage 34 sont placés dans le circuit 32, de façon à faire circuler le lubrifiant dans ledit circuit, entre le réservoir 30 et la rainure 28.

Le dispositif de lubrification selon l'invention comprend également des moyens pour actionner les moyens de pompage 34 sous l'effet d'un mouvement de rotation de l'axe de pivotement 16. Ces moyens d'actionnement sont illustrés schématiquement par le trait mixte 36 sur la figure 2. Ils peuvent prendre différentes formes (bielle, courroie, génératrice, etc.) sans sortir du cadre de l'invention.

Dans le dispositif de lubrification conforme à l'invention, les mouvements de rotation de l'axe de pivotement 16 qui se produisent lors de la sortie ou de la rentrée du train d'atterrissage ont pour effet d'actionner les moyens de pompage 34, au travers des moyens d'actionnement 36. Les moyens de pompage 34 envoient alors le lubrifiant provenant du réservoir 30 vers une première extrémité 28a de la rainure 28. Le lubrifiant ainsi injecté pousse celui qui est déjà contenu dans la rainure 28, en assurant une circulation du lubrifiant à l'intérieur de celle-ci. Le surplus de lubrifiant est éjecté par la deuxième extrémité 28b de la rainure 28, d'où il est envoyé dans le réservoir 30. Le dispositif fonctionne donc en circuit fermé.

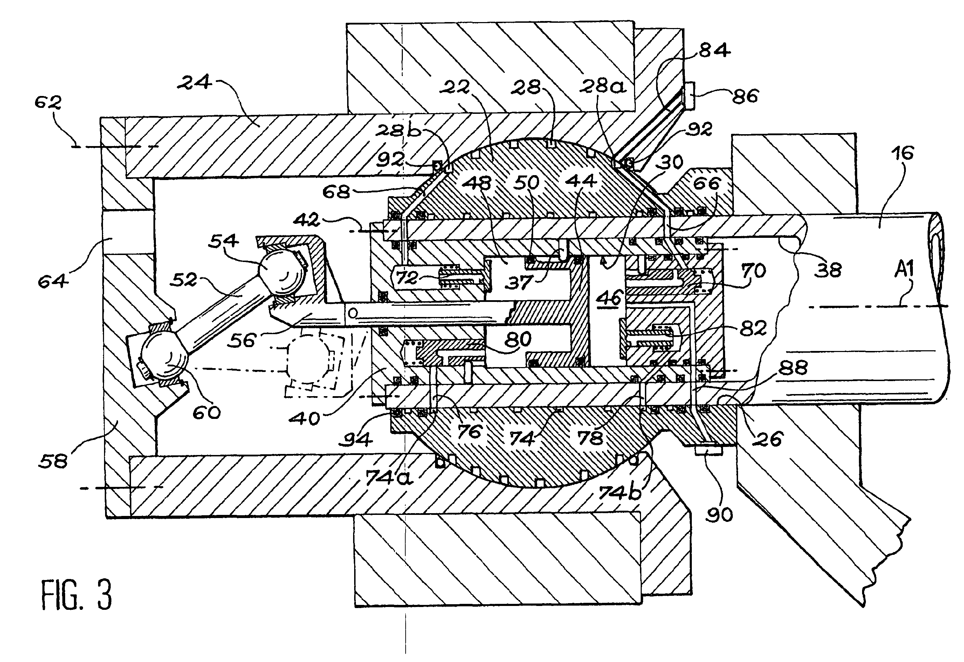

Sur la figure 3, on a représenté un mode de réalisation préféré de l'invention, dans lequel le réservoir 30 est intégré à l'intérieur de l'axe de pivotement 16. Le mode de réalisation de la figure 3 se distingue également de la représentation schématique de la figure 2 par le fait qu'il permet également de lubrifier les surfaces en contact de la noix 22 de la rotule et de l'axe de pivotement 16. De façon plus précise et comme on le décrira plus en détail par la suite, le dispositif de lubrification est agencé de façon telle que les rotations successives de l'axe de pivotement 16 dans l'un et l'autre sens, provoquées par les mouvements de sortie et de rentrée du train d'atterrissage, ont pour effet d'injecter alternativement du lubrifiant entre la noix 22 et la cage 24 de la rotule, et entre l'axe 16 et la noix 22.

Dans le mode de réalisation illustré sur la figure 3, l'axe de pivotement 16 est creux et traversé sur toute sa longueur par un alésage 38. Le réservoir 30 est formé dans une pièce cylindrique 40 qui vient se loger dans l'alésage 38, à l'une des extrémités de l'axe 16. La fixation de la pièce 40 dans l'axe 16 est assurée par des vis (illustrées symboliquement par des traits mixtes 42) qui traversent une collerette formée sur la pièce cylindrique 40, pour venir se visser dans l'extrémité de l'axe de pivotement 16.

Le réservoir 30 est matérialisé par une cavité cylindrique formée dans la pièce 40. Cette cavité est centrée sur l'axe géométrique A1 de l'axe de pivotement 16.

Les moyens de pompage 34 de la figure 2 sont matérialisés par un piston 44, monté à l'intérieur du réservoir 30 de façon à pouvoir coulisser selon son axe géométrique A1, tout en étant immobilisé en rotation, par exemple par au moins une goupille 37. Le piston 44 divise le réservoir 30 en deux chambres 46 et 48. Des joints d'étanchéité 50 portés par le piston 44 assurent la séparation étanche de ces deux chambres 46 et 48.

Les moyens d'actionnement 36 de la figure 2 sont matérialisés principalement par une bielle 52. Une première extrémité de cette bielle 52 est reliée par une articulation 54 à l'extrémité d'une tige 56 solidaire du piston 44. De façon plus précise, la tige 56 traverse la pièce 40 de façon étanche, selon l'axe géométrique A1. De plus, l'extrémité de la tige 56 située à l'extérieur de l'axe de pivotement 16 est reliée à la bielle 52 par l'articulation 54 en un emplacement excentré, c'est-à-dire décalé latéralement par rapport à l'axe géométrique A1.

La deuxième extrémité de la bielle 52 est articulée sur un flasque 58, solidaire de la structure de l'aéronef, par une deuxième articulation 60. Plus précisément, le flasque 58 est fixé par des vis (illustrées schématiquement par des traits mixtes 62 sur la figure 3) à l'extrémité d'un prolongement de la cage 24 de la rotule du palier. L'articulation 60 est également située en un emplacement excentré par rapport à l'axe géométrique A1. Des trous 64 sont prévus dans le flasque 58 pour permettre de manoeuvrer les vis 42 sans avoir à démonter ledit flasque.

Sur la figure 3, la rainure de lubrification 28 des surfaces en contact de la noix 22 et de la cage 24 de la rotule est formée sur la surface extérieure de la noix 22.

Le circuit fermé 32 qui relie le réservoir 30 à cette rainure 28 est matérialisé par un premier passage 66 mettant en communication la chambre 46 et la première extrémité 28a de la rainure 28 et par un deuxième passage 68 mettant en communication la deuxième extrémité 28b de la rainure 28 avec la chambre 48. Chacun des passages 66 et 68 traverse la pièce 40, l'axe de pivotement 16 et la noix 22.

L'extrémité du premier passage 66 située dans la pièce 40 débouche dans la chambre 46 au travers d'une première soupape 70. Cette première soupape 70 isole normalement la chambre 46 du passage 66. En revanche, elle établit une communication entre la chambre 46 et le passage 66 lorsque le piston 44 se déplace selon l'axe géométrique A1 dans le sens tendant à diminuer le volume de la chambre 46 et à augmenter celui de la chambre 48, c'est-à-dire vers la droite sur la figure 3.

L'extrémité du deuxième passage 68 située dans la pièce 40 débouche dans la chambre 48 au travers d'une deuxième soupape 72. Cette deuxième soupape est munie d'un clapet anti-retour. Elle interdit tout passage de lubrifiant de la chambre 48 vers le deuxième passage 68, tout en autorisant une circulation du lubrifiant en sens inverse.

Pour permettre une lubrification des surfaces en contact de la noix 22 et de l'axe de pivotement 16, une deuxième rainure 74 est usinée dans l'alésage qui traverse la noix 22. Cette rainure chemine, par exemple selon une trajectoire hélicoïdale, entre une première extrémité 74a et une deuxième extrémité 74b.

Un deuxième circuit fermé relie le réservoir 30 à la deuxième rainure 74. Ce deuxième circuit comprend un troisième passage 76 mettant en communication la chambre 48 avec la première extrémité 74a de la rainure 74 et un quatrième passage 78 mettant en communication la deuxième extrémité 74b de la rainure 74 avec la chambre 46. Chacun des passages 76 et 78 traverse la pièce 40 et l'axe de pivotement 16.

L'extrémité du troisième passage 76 située dans la pièce 40 débouche dans la chambre 48 au travers d'une troisième soupape 80. Cette troisième soupape 80 isole normalement la chambre 48 du passage 76. En revanche, elle établit une communication entre la chambre 48 et le passage 76 lorsque le piston 44 se déplace selon l'axe géométrique A1 dans le sens tendant à diminuer le volume de la chambre 48 et à augmenter celui de la chambre 46, c'est-à-dire vers la gauche sur la figure 3.

L'extrémité du quatrième passage 78 située dans la pièce 40 débouche dans la chambre 46 au travers d'une quatrième soupape 82. Cette quatrième soupape est munie d'un clapet anti-retour. Elle interdit tout passage de lubrifiant de la chambre 46 vers le quatrième passage 78, tout en autorisant une circulation du lubrifiant en sens inverse.

Pour compléter la description, on observe sur la figure 3 qu'un cinquième passage 84 traverse la noix 24, de façon à relier la première extrémité 28a de la première rainure 28 à un premier graisseur 86, accessible depuis l'extérieur du palier à rotule. De façon comparable, un sixième passage 88 traverse la pièce 40, l'axe de pivotement 16 et la noix 22, de façon à relier la deuxième extrémité 74b de la deuxième rainure 74 à un deuxième graisseur 90, accessible depuis l'extérieur du palier à rotule. En fonctionnement normal, les graisseurs 86 et 90 sont fermés.

Lorsque le dispositif de lubrification est en état de marche, les deux chambres 46 et 48 du réservoir 30, les rainures 28 et 74 et les passages 66, 68, 76, 78, 84 et 88 sont normalement remplis d'un lubrifiant de forte viscosité tel que de la graisse.

Avantageusement, des joints d'étanchéité 92, tels que des joints à doubles lèvres, sont prévus à la périphérie des surfaces de contact entre la noix 22 et la cage 24 de la rotule. De façon comparable, des joints d'étanchéité 94, tels que des joints à quatre lobes, permettant à la fois des mouvements de rotation et de translation de l'axe de pivotement 16, sont prévus à la périphérie des surfaces de contact entre cet axe 16 et la noix 22 de la rotule.

Les joints 92 et 94 sont dimensionnés pour résister à la pression du lubrifiant engendrée par les déplacements du piston 44. Ils permettent de limiter les fuites de lubrifiant qui pourraient se produire à la périphérie desdites surfaces sous l'effet de cette pression. Ainsi, le volume d'air susceptible d'entrer dans les rainures 28 et 74 et/ou dans les chambres 46 et 48 entre deux opérations de remplacement du lubrifiant est suffisamment faible, vis-à-vis de la course du piston, pour que les déplacements dudit piston entraînent une circulation satisfaisante du lubrifiant et pas seulement une compression dudit volume d'air.

Dans une variante de réalisation (non représentée) de l'invention, le dispositif de lubrification comprend de plus une chambre de compensation contenant du lubrifiant sous pression. Cette chambre de compensation est reliée aux deux chambres 46 et 48 du réservoir 30, de façon à injecter automatiquement dans lesdites chambres 46 et 48 du lubrifiant issu de la chambre de compensation, lorsque des pertes de lubrifiant au niveau des joints 92 et 94 tendent à diminuer le volume de lubrifiant contenu dans les chambres 46 et 48.

A titre d'exemple non limitatif, le maintien sous pression du lubrifiant dans la chambre de compensation peut notamment être assuré par un second piston situé dans ladite chambre de compensation. Ce second piston est lors actionné par un ressort dont le coefficient d'élasticité a une valeur suffisante pour que le second piston exerce la pression souhaitée sur le lubrifiant.

Cette variante de réalisation permet d'éviter que de l'air s'introduise dans les chambres 46 et 48. Elle autorise donc l'utilisation d'un piston 44 ayant une course moins importante que dans le mode de réalisation décrit précédemment. L'encombrement du dispositif de lubrification peut donc être réduit.

Cette variante de réalisation permet aussi d'utiliser des joints 92 et 94 dont les caractéristiques d'étanchéité sont moins élevées que dans le mode de réalisation décrit précédemment.

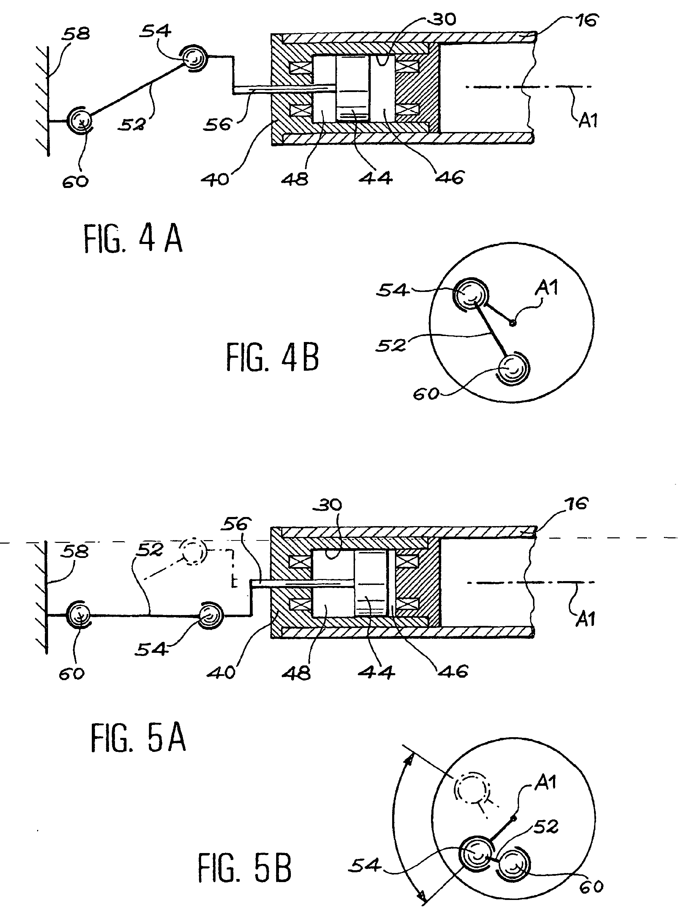

Lorsque le train d'atterrissage est rentré, les différentes pièces mobiles du dispositif de lubrification occupent les positions qui sont illustrées sur la figure 3. Comme on l'a représenté schématiquement sur les figures 4A et 4B, les articulations 54 et 60 de la bielle 52 sont alors espacées angulairement l'une de l'autre autour de l'axe géométrique A1, de telle sorte que le piston 44 occupe une première position extrême correspondant au plus petit volume possible de la chambre 48 et au plus grand volume possible de la chambre 46.

Comme l'illustrent schématiquement les figures 5A et 5B, un mouvement de sortie du train d'atterrissage a pour effet de faire tourner l'axe de pivotement 16 d'un angle déterminé (par exemple, environ 78°) dans le sens inverse des aiguilles d'une montre sur les figures 4B et 5B. Cette rotation a pour effet de rapprocher angulairement l'articulation 54 de l'articulation 60. Par conséquent, la bielle 52 repousse le piston 44 vers la droite en considérant les figures 3, 4A et 5A. Ce mouvement du piston 44 se traduit par une diminution du volume de la chambre 46 et par une augmentation équivalente du volume de la chambre 48.

La diminution du volume de la chambre 46 a pour effet d'expulser vers la première extrémité de la première rainure 28, au travers de la première soupape 70, un certain volume du lubrifiant contenu dans la chambre 46. Un volume égal du lubrifiant préalablement contenu dans la rainure 28 est chassé dans la chambre 48 au travers de la deuxième soupape 72.

En revanche, le mouvement de sortie du train d'atterrissage n'a aucun effet sur le lubrifiant contenu dans la deuxième rainure 74. En effet, le clapet anti-retour de la quatrième soupape 82 s'oppose alors à toute circulation du lubrifiant de la chambre 46 vers la deuxième rainure 74.

Lors du mouvement de rentrée du train d'atterrissage qui suit ce mouvement de sortie, l'axe de pivotement 16 tourne autour de son axe géométrique A1 d'un angle égal et opposé au précédent. Ainsi, l'axe de pivotement 16 tourne dudit angle (par exemple d'environ 78°) dans le sens des aiguilles d'une montre en considérant les figures 4B et 5B. Il en résulte un déplacement du piston 44 dans le sens correspondant à une diminution du volume de la chambre 48 et à une augmentation comparable du volume de la chambre 46. On passe ainsi de l'état des figures 5A et 5B à celui des figures 3, 4A et 4B.

Lors de ce mouvement du piston 44 vers la gauche en considérant la figure 3, un certain volume de lubrifiant contenu dans la chambre 48 est expulsé vers la deuxième rainure 74 au travers de la troisième soupape 80. Un volume égal de lubrifiant préalablement contenu dans la rainure 74 est poussé dans la chambre 46 au travers de la quatrième soupape 82.

En revanche, le mouvement de rentrée du train d'atterrissage n'a aucun effet sur le lubrifiant contenu dans la première rainure 28. En effet, le clapet anti-retour de la deuxième soupape 72 empêche toute expulsion vers la première rainure 28 du lubrifiant contenu dans la chambre 48.

Le renouvellement du lubrifiant contenu dans le réservoir 30 et dans les rainures de lubrification 28 et 74 est réalisé lors d'opérations périodiques de maintenance. On utilise alors les graisseurs 86 et 90.

De façon plus précise, lorsqu'on désire procéder au renouvellement du lubrifiant, un opérateur ouvre les deux graisseurs 86 et 90. Du lubrifiant neuf est ensuite injecté à l'aide d'une pompe par le graisseur 86. Sous l'effet de la pression de la pompe, le lubrifiant neuf pénètre dans la première rainure 28, puis dans la chambre 48, en ouvrant le clapet anti-retour de la deuxième soupape 72. Simultanément, le lubrifiant usagé est expulsé de la première rainure 28 et de la chambre 48 vers la deuxième rainure 74, au travers de la troisième soupape 80. Le lubrifiant neuf expulse ensuite le lubrifiant usagé de cette deuxième rainure 74 dans la chambre 46, en ouvrant le clapet anti-retour de la quatrième soupape 82. Le lubrifiant usagé est ensuite expulsé de la chambre 46 vers l'extérieur du dispositif par le passage 88 et le graisseur 90. Il est à noter que le lubrifiant usagé admis dans la chambre 46 ne peut pas retourner dans la première rainure 28 par la première soupape. En effet, le lubrifiant neuf injecté sous pression par le graisseur 86 s'y oppose.

Tout le lubrifiant usagé est ainsi expulsé et remplacé par du lubrifiant neuf selon ce cheminement. Lorsqu'un volume suffisant de lubrifiant neuf a été injecté, les deux graisseurs 86 et 90 sont refermés. Le volume de lubrifiant dépend principalement de la taille du réservoir 30. Les opérations de remplacement du lubrifiant peuvent être d'autant plus espacées que le réservoir est de grande taille.

Le dispositif de lubrification qui vient d'être décrit en référence aux figures 3, 4A, 4B, 5A et 5B présente l'avantage de garantir, d'une part, le renouvellement du lubrifiant contenu entre la noix 22 et la cage 24 de la rotule et, d'autre part, le renouvellement du lubrifiant contenu entre la noix 22 et l'axe de pivotement 16, lors de chacune des rotations successives et de sens alterné dudit axe de pivotement 16, qui correspondent aux manoeuvres de sortie du train avant l'atterrissage de l'avion et de rentrée du train dans le fuselage après le décollage de l'avion.

Le mode de réalisation décrit présente aussi l'avantage de permettre un démontage et un remontage faciles du dispositif de lubrification, lorsque des opérations de maintenance le nécessitent. En effet, du fait que le dispositif est logé dans la partie d'extrémité de l'axe de pivotement 16, il peut être démonté en dévissant les vis 42 de fixation de la pièce 40 sur ledit axe, au travers des trous 64, puis en dévissant les vis 62 de fixation du flasque 58 sur la cage 24 du palier. Le remontage s'effectue en réalisant les opérations inverses des précédentes. Cette facilité de démontage et de montage permet de réduire le temps de maintenance et les coûts qui en résultent. Elle rend également possible un échange standard du dispositif de lubrification.

Le dispositif de lubrification décrit présente aussi l'avantage d'assurer le renouvellement du lubrifiant dans les rainures 28 et 74 à partir d'un seul réservoir 30 commun aux circuits d'alimentation de ces rainures. Ainsi, les opérations de maintenance sont facilitées, ce qui permet une réduction de leur durée et de leur coût, ainsi qu'une diminution du temps d'immobilisation de l'avion.

Comme on l'a déjà observé, le dispositif de lubrification selon l'invention peut être utilisé dans tous les cas où un palier à rotule permet de supporter un axe de pivotement ou de rotation dont les mouvements sont suffisamment lents pour permettre la circulation d'un lubrifiant de forte viscosité, tel que de la graisse.

## Revendications

1. Dispositif de lubrification d'un palier à rotule comportant un axe de pivotement (16), le dispositif comprenant au moins une rainure (28, 74) de lubrification du palier à rotule, **caractérisé en ce que** le dispositif comprend de plus un réservoir de lubrifiant (30) relié à la rainure (28, 74) par un circuit fermé (32), des moyens de pompage (34) aptes à faire circuler le lubrifiant dans le circuit (32) entre le réservoir (30) et la rainure (28, 74) et des moyens (36) pour actionner les moyens de pompage (34) sous l'effet d'un mouvement de rotation de l'axe de pivotement (16).

2. Dispositif de lubrification selon la revendication 1, dans lequel le dispositif comprend au moins deux rainures (28, 74) de lubrification et des moyens (70, 72, 80, 82) pour distribuer le lubrifiant à chacune desdites rainures, de façon cyclique, lors de mouvements de rotation successifs de l'axe de pivotement (16).

3. Dispositif de lubrification selon l'un quelconque des revendications 1 et 2, dans lequel les moyens de pompage (34) comprennent un piston (44) mobile selon une direction donnée à l'intérieur du réservoir de lubrifiant (30), de façon à diviser celui-ci en deux chambres (46, 48) à volumes variables.

4. Dispositif de lubrification selon les revendications 2 et 3 combinées, dans lequel une première (46) desdites chambres est reliée à une première extrémité (28a) d'une première rainure (28) par une première soupape (70), la deuxième chambre (48) est reliée à la deuxième extrémité (28b) de la première rainure (28) par une deuxième soupape (72) munie de moyens anti-retour, la deuxième chambre (48) est reliée à une première extrémité (74a) d'une deuxième rainure (74) par une troisième soupape (80) et la première chambre (46) est reliée à la deuxième extrémité (74b) de la deuxième rainure (74) par une quatrième soupape (82) munie de moyens anti-retour, les première (70), deuxième (72), troisième (80) et quatrième (82) soupapes formant lesdits moyens pour distribuer le lubrifiant.

5. Dispositif de lubrification selon la revendication 4, dans lequel le palier à rotule comprend une cage de rotule (24), une noix de rotule (22) montée dans la cage de rotule (24) et ledit axe de pivotement, celui-ci traversant un alésage (26) formé dans la noix de rotule (22), la première rainure (28) étant formée entre la cage de rotule (24) et la noix de rotule (22) et la deuxième rainure (74) étant formée entre la noix de rotule (24) et l'axe de pivotement (16).

6. Dispositif de lubrification selon la revendication 5, dans lequel des premiers moyens d'étanchéité (28) sont prévus entre la cage (24) de rotule et la noix (22) de rotule, de part et d'autre de la première rainure (28) et des deuxièmes moyens d'étanchéité (28) sont prévus entre la noix (22) de rotule et l'axe de pivotement (16), de part et d'autre de la deuxième rainure (28).

7. Dispositif de lubrification selon l'une quelconque des revendications 4 à 6, dans lequel un passage (84) d'injection de lubrifiant neuf relie un premier graisseur (86) à la première extrémité (28a) de la première rainure (28) et un passage (88) d'expulsion de lubrifiant usagé relie la première chambre (46) à un deuxième graisseur (90).

8. Dispositif de lubrification selon l'une quelconque des revendications 3 à 7, dans lequel les deux chambres (46, 48) à volume variable sont reliées à une chambre de compensation contenant du lubrifiant sous pression.

9. Dispositif de lubrification selon l'une quelconque des revendications précédentes, dans lequel le réservoir de lubrifiant (30) et le piston mobile (44) sont logés à l'intérieur de l'axe de pivotement (16), de façon à présenter un axe géométrique (A1) commun avec celui-ci.

10. Dispositif de lubrification selon la revendication 9, dans lequel les moyens (36) pour actionner les moyens de pompage (34) comprennent une bielle (52) dont une première extrémité est articulée sur le piston (44) en un emplacement excentré par rapport audit axe géométrique commun (A1) et dont une deuxième extrémité est articulée sur une structure fixe (58) en un emplacement également excentré par rapport audit axe géométrique commun (A1).

11. Dispositif de lubrification selon l'une quelconque des revendications précédentes, dans lequel l'axe de pivotement (16) fait partie d'un train d'atterrissage (10) d'aéronef.

12. Dispositif de lubrification selon la revendication 11, combinée avec l'une quelconque des revendications 4 à 7, dans lequel des opérations successives de sortie et de rentrée du train d'atterrissage (10) entraînent des rotations successives de l'axe de pivotement (16) dans l'un et l'autre sens, qui ont pour effet d'injecter du lubrifiant alternativement dans la première rainure (28) et dans la deuxième rainure (74).

13. Dispositif de lubrification selon l'une quelconque des revendications précédentes, dans lequel le lubrifiant est de la graisse.

## Patentansprüche

1. Vorrichtung zur Schmierung eines Gelenk- bzw. Kipplagers mit Dreh-/Schwenkachse (16), wobei die Vorrichtung mindestens eine Nut (28,74) zur Schmierung des Gelenklagers umfasst, **dadurch gekennzeichnet, dass** die Vorrichtung außerdem einen Schmiermittelbehälter (30) umfasst, der mit der Nut (28,74) über einen geschlossenen Kreislauf (32) verbunden ist, Pumpmittel (34), welche das Schmiermittel in dem Kreislauf (32) zwischen dem Behälter (30) und der Nut (28,74) zirkulieren lassen können, sowie Mittel (36) zum Betätigen der Pumpmittel (34) unter der Wirkung einer Drehbewegung der Dreh-/Schwenkachse (16).

2. Schmiervorrichtung nach Anspruch 1, wobei die Vorrichtung mindestens zwei Schmiernuten (28,74) sowie Mittel (70,72,80,82) zum Verteilen des Schmiermittels an jede der Nuten auf zyklische Weise während sukzessiver Drehbewegungen der Dreh-/Schwenkachse (16) umfasst.

3. Schmiervorrichtung nach einem der Ansprüche 1 oder 2, wobei die Pumpmittel (34) einen beweglichen Kolben (44) in einer gegebenen Richtung im Innern des Schmiermittelbehälters (30) umfasst, so dass dieser in zwei Kammern (46,48) mit variablen Volumen unterteilt ist.

4. Schmiervorrichtung nach Anspruch 2 und 3 in Kombination, wobei eine erste (46) der Kammern mit einem ersten Ende (28a) einer ersten Nut (28) über ein erstes Ventil (70) verbunden ist, die zweite Kammer (48) mit dem zweiten Ende (28b) der ersten Nut (28) über ein mit Rückschlagmittel versehenes zweites Ventil (72) verbunden ist, die zweite Kammer (48) mit einem ersten Ende (74a) einer zweiten Nut (74) über ein drittes Ventil (80) verbunden ist und die erste Kammer (46) mit dem zweiten Ende (74b) der zweiten Nut (74) über ein mit Rückschlagmitteln versehenes viertes Ventil (82) verbunden ist, wobei das erste (70), zweite (72), dritte (80) und vierte Ventil (82) die Mittel zum Verteilen des Schmiermittels bilden.

5. Schmiervorrichtung nach Anspruch 4, wobei das Gelenklager einen Kugelgelenkkäfig (24), einen in dem Kugelgelenkkäfig (24) angebrachten Kugelgelenkkopf (22) und die Dreh-/Schwenkachse aufweist, wobei diese eine in dem Kugelgelenkkopf (22) ausgebildete Bohrung (26) durchsetzt, die erste Nut (28) zwischen dem Kugelgelenkkäfig (24) und dem Kugelgelenkkopf (22) ausgebildet ist und die zweite Nut (74) zwischen dem Kugelgelenkkopf (24) und der Dreh-/Schwenkachse (16) ausgebildet ist.

6. Schmiervorrichtung nach Anspruch 5, wobei erste Abdichtungsmittel (28) zwischen dem Kugelgelenkkäfig (24) und dem Kugelgelenkkopf (22) auf beiden Seiten der ersten Nut (28) vorgesehen sind, und zweite Abdichtungsmittel (28) zwischen dem Kugelgelenkkopf (22) und der Dreh-/Schwenkachse (16) auf beiden Seiten der zweiten Nut (28) vorgesehen sind.

7. Schmiervorrichtung nach einem der Ansprüche 4 bis 6, wobei ein Durchgang (84) zum Einspritzen neuen Schmiermittels eine erste Schmiereinrichtung (86) mit dem ersten Ende (28a) der ersten Nut (28) verbindet, und ein Durchgang (88) zum Ausstoßen verbrauchten Schmiermittels die erste Kammer (46) mit einer zweiten Schmiereinrichtung (90) verbindet.

8. Schmiervorrichtung nach einem der Ansprüche 3 bis 7, wobei die beiden Kammern (46,48) mit variablem Volumen mit einer Ausgleichskammer verbunden sind, die Schmiermittel unter Druck enthält.

9. Schmiervorrichtung nach einem der vorangehenden Ansprüche, wobei der Schmiermittelbehälter (30) und der bewegliche Kolben (44) im Innern der Dreh-/Schwenkachse (16) derart angeordnet sind, dass sie eine gemeinsame geometrische Achse (A1) mit dieser aufweisen.

10. Schmiervorrichtung nach Anspruch 9, wobei die Mittel (36) zum Betätigen der Pumpmittel (34) eine Kurbelstange (52) umfassen, von der ein erstes Ende mit dem Kolben (44) an einer exzentrisch in Bezug auf die gemeinsame geometrische Achse A1 angeordneten Stelle gelenkig verbunden ist, und von der ein zweites Ende mit einer feststehenden Struktur (58) ebenfalls an einer exzentrisch in bezug auf die gemeinsame geometrische Achse A1 angeordneten Stelle gelenkig verbunden ist.

11. Schmiervorrichtung nach einem der vorangehenden Ansprüche, wobei die Dreh-/Schwenkachse (16) einen Teil eines Fahrwerks (10) eines Luftfahrzeugs bildet.

12. Schmiervorrichtung nach Anspruch 11 in Kombination mit einem der Ansprüche 4 bis 7, wobei aufeinanderfolgende Arbeitsgänge des Ausfahrens und Einfahrens des Fahrwerks (10) aufeinanderfolgende Drehungen der Dreh-/Schwenkachse (16) in der einen und der anderen Richtung hervorrufen, die bewirken, dass alternierend in die erste Nut (28) und in die zweite Nut (74) Schmiermittel eingespritzt wird.

13. Schmiervorrichtung nach einem der vorangehenden Ansprüche, wobei das Schmiermittel Schmierfett ist.

## Claims

1. Lubrication device for a ball joint bearing block comprising a pivot hinge pin (16), the device also comprising at least one lubrication groove (28, 74) for the ball joint bearing block, **characterized in that** the device also comprises a lubricant reservoir (30), connected to the groove (28, 74) through a closed circuit (32), pumping means (34) capable of circulating lubricant in the circuit (32) between the reservoir (30) and the groove (28, 74) and means (36) of activating the pumping means (34) under the effect of a rotation movement of the pivot hinge pin (16).

2. Lubrication device according to claim 1, in which the device comprises at least two lubrication grooves (28, 74) and means (70, 72, 80, 82) of cyclically distributing the lubricant to each of the said grooves, during successive rotation movements of the pivot hinge pin (16).

3. Lubrication device according to any one of claims 1 and 2, in which the pumping means (34) comprise a piston (44) free to move along a given direction inside the lubricant reservoir (30), in order to divide the lubricant reservoir into two chambers (46, 48) with variable volumes.

4. Lubrication device according to claims 2 and 3 combined, in which a first (46) of the said chambers is connected to a first end (28a) of a first groove (28) through a first valve (70), the second chamber (48) is connected to the second end (28b) of the first groove (28) through a second valve (72) provided with non-return means, the second chamber (48) is connected to a first end (74a) of a second groove (74) through a third valve (80) and the first chamber (46) is connected to the second end (74b) of the second groove (74) through a fourth valve (82) provided with non-return means, the first (70), second (72), third (80) and fourth (82) valves forming the said means of distributing the lubricant.

5. Lubrication device according to claim 4, in which the ball joint bearing block comprises a ball joint cage (24), a ball joint ball (22) installed in the ball joint cage (24) and the said pivot hinge pin which passes through a reaming (26) formed in the ball of the ball joint (22), the first groove (28) being formed between the ball joint cage (24) and the ball joint ball (22), and the second groove (74) being formed between the ball joint ball (24) and the pivot hinge pin (16).

6. Lubrication device according to claim 5, in which first leak tightness means (28) are provided between the ball joint cage (24) and the ball joint ball (22), on each side of the first groove (28), and second leak tightness means (28) are provided between the ball joint ball (22) and the pivot hinge pin (16) on each side of the second groove (28).

7. Lubrication device according to any one of claims 4 to 6, in which a passage (84) for injection of new lubricant connects a first grease nipple (86) to the first end (28a) of the first groove (28) and a passage (88) for expulsion of used lubricant connects the first chamber (46) to a second grease nipple (90).

8. Lubrication device according to any one of claims 3 to 7, in which the volume of the two chambers (46, 48) is variable, and these chambers are connected to a compensation chamber containing lubricant under pressure.

9. Lubrication device according to any one of the previous claims, in which the lubricant reservoir (30) and the moving piston (44) are housed inside the pivot hinge pin (16) such that the center line (A1) is common with the center line of the pivot hinge pin.

10. Lubrication device according to claim 9, in which the means (36) of actuating the pumping means (34) comprise a connecting rod (52), a first end of which is articulated on the piston (44) at an eccentric location with respect to the said common center line (A1) and the second end of which is articulated on a fixed structure (58) at a location that is also offset from the said common center line (A1).

11. Lubrication device according to any one of the previous claims, in which the pivot hinge pin (16) forms part of a landing gear (10) of an aircraft.

12. Lubrication device according to claim 11, combined with any one of claims 4 to 7, in which successive extension and retraction operations of the landing gear (10) cause successive rotations of the pivot hinge pin (16) in two directions, which has the effect of injecting lubricant alternately into the first groove (28) and into the second groove (74).

13. Lubrication device according to any one of the previous claims, in which the lubricant is grease.
